# EUROPEAN PATENT SPECIFICATION

(11) **EP 1 055 861 B1**
(45) Date of publication and mention of the grant of the patent: **04.09.2002**
(21) Application number: 00110422.3
(22) Date of filing: 16.05.2000
(51) Int. Cl.: F16M 7/00, B23Q 1/01, B23Q 37/00

(54) **Box for rotary machines with interchangeable base and embedded stiffness element**
Gehäuse für rotierende Maschinen mit auswechselbarem Boden und integriertem Stabilitätselement
Boîte de machines rotatifs avec la base interchangeable et l'élément inclus de rigidité

(30) Priority: 28.05.1999 IT VI990040 U; 16.11.1999 IT VI990100 U
(43) Date of publication of application: 29.11.2000
(73) Proprietor: HYDRO-MEC S.r.l., 36050 Sovizzo (Vicenza) (IT)
(72) Inventor: Speggiorin, Stefano, 36077 Altavilla (VI) (IT)
(74) Representative: De Gregori, Antonella

(56) References cited:
- DE-A- 2 124 894
- US-A- 2 695 202
- US-A- 4 426 163

## Description

The present invention relates to a box for rotary machines, in particular for gear motors, said box comprising a body containing the gear reduction unit and a base to be fastened on the box body by means of screws and which can be replaced to allow changing the gear motor with other kinds of gear motors available on the market, as well as a bracket having connections for making it integral with the box body, and being provided with a foot fitting under said base, said bracket being made integral with the box body adjacent to the driving shaft to unload the forces transmitted by the driving shaft directly onto the machine body.

Thus the necessary stiffness and resistance of the box frame can be ensured also when the forces involved are quite high, permitting to provide even medium or large size gear motor boxes having an interchangeable base, said boxes being subject to considerable loads.

In addition, the box of the invention may comprise binding means, such as embedding elements or the like, which rigidly bind the box and the base, possibly by means of an adhesive, to provide substantially a single block which can bear the stresses unloaded on the box by the driving shaft of the gear motor, without any deformation and, above all, without any shift of the box and the base.

These embedding binding elements preferably comprise protruding parts such as prominences, plugs or the like on the base or the box, which fit into corresponding housings provided respectively on the box or the base to make the assembly perfectly integral.

Thus it is possible to ensure the necessary stiffness and resistance of the box frame and maintain all dimensions and references without any shift, permitting to provide gear motor boxes of even medium or large size, which thus are subject to considerable loads which, however, ensure perfect stability and complete lack of shifts and/or deformations.

US-A-4.426.163 describes a double-walled, box-like bearing support arrangement for electrical machines which has, between the two walls, reinforcements and supports for the bearings, the bearing support arrangement extending approximately up to the axial center plane of the bearings. The bearing support arrangement can be made in one part or in several parts, that is to say it can, at least on one side of the machine, be subdivided horizontally into two supporting bodies, or the lower supporting body and the upper supporting body, respectively, can likewise be subdivided in a vertical direction.

US-A-2.695.202 relates to an improved pillow block comprising two flat housing plates for a bearing, each plate having an annular flange carried by a block base consisting of a base plate with integral upwardly extending flanges.

DE 2124202 relates to an electric machine with a support block for the shaft.

As known, each of the biggest manufacturers of gear motors proposes his own range of models, having connections of several dimensions for fastening to the machines.

The gear motors comprise a gear-wheel or worm gear mechanism inside a cast iron or aluminium box having a differentsize depending on the power to be transmitted.

In order to be fastened to the machines these boxes are provided with feet or brackets having holes to let screws through for fastening the gear motor.

The feet are usually integral with the case, which is often made of aluminium or cast iron by die casting.

As the decrease in the number of revolutions involves a considerable increase in the torque transmitted by the driving shaft, which a chain pinion or a joint or any other mechanism for transmitting motion is normally applied to, also small gear reduction units must transmit considerable forces, which always unload on the driving shafts and thus, through the bearings, on the gear motor box.

For this reason the gear motor boxes are generally a single assembly, to provide the maximum stiffness and resistance particularly in the places of junction with the machine, i.e., in the feet.

For not too high transmitted power this allows the necessary features of stiffness and resistance.

However, the drawback consists in that, as the dimensions of the gear motors and, thence, of the boxes change depending on the manufacturer, a gear motor cannot be replaced with one of another kind or of another manufacturer, with the consequent economic and commercial drawbacks, and because the product is not suitable for replacing other kinds of products.

The problem of interchangeability has been partly solved by providing gear reduction units the case of which has a flat surface to be connected with a foot or interchangeable base, which is fastened to the case by means of screws being tightened inside threaded holes in the box body.

However, in many cases this system cannot be validly applied and is not accepted by customers willingly, except for very small power, due to the limited capacity of the screws and, above all, of the threads in the box body, which is often made of aluminium, to resist over time to the high loads applied onto the shafts by the gear reduction units, to keep references and dimensions unchanged with the same stiffness of a box assembly or block.

The problem is now solved by the present invention, which provides a box for gear motors, comprising a stiffening bracket for absorbing the forces transmitted by the driving shaft, thus preventing said forces from being unloaded on the box fastening screws.

To this purpose the invention provides a gear motor box having a bracket rigidly fastened to the case adjacent to the driving shaft and being provided with a foot engaging the case interchangeable base.

This way the forces, from the driving shaft, are unloaded on said bracket, thus avoiding too high stresses on the gear motor case.

To improve stiffness, the invention also provides, in a box for gear motors having an interchangeable base, at least in one of the two parts, protruding elements fitting in the housings provided in the other part, to stop any movement on the base horizontal plane.

These protruding elements may be prominences provided directly on the box or the base and/or plugs being embedded and locked inside holes provided in one of the two parts and fitting in corresponding holes provided in the other part.

In addition, to make the whole assembly even more integral, it is possible to use an adhesive, for example an anaerobic adhesive, distributed on the mating surface of the base and the box.

By these means all the forces which would completely unload on the fastening screws from the base to the box are absorbed and homogeneoulsy distributed on the mating surface of the two parts, thus excluding any possible clearance.

The present invention will now be described in detail, by way of non restrictive example, with reference to the accompanying drawings, in which:
- figure 1 is an exploded perspective view of a gear motor box according to the invention;
- figure 2 is a bottom view of a box according to the invention, showing a foot of the stiffening bracket;
- figures 3 and 4 are an exploded perspective view and a bottom view of a gear motor box according to a different embodiment of the invention;
- figures 5 and 6 are an exploded perspective view and a bottom view of a gear motor box according to a further preferred embodiment of the invention;
- figures 7 and 8 are respectively the perspective view of a further embodiment of a box and of a bracket according to the invention.

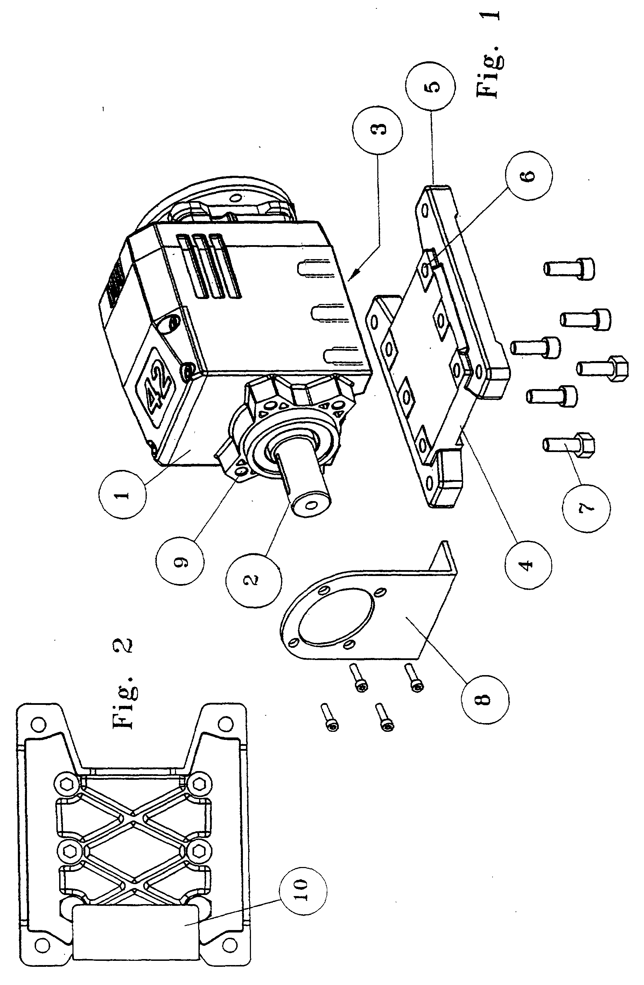

With reference to figures 1 and 2, numeral 1 indicates the body of the box for the gear reduction unit, whereas numeral 2 shows the driving shaft.

The lower wall 3 of the body 1 is flat, it can be applied onto a base 4 having feet 5 for fastening to the machine frame and having a plurality of holes 6 to let screws 7 through, said screws being tightened inside housings in the body 1, to join firmly the base to the box for the gear reduction unit.

The invention preferably has a bracket 8 to be anchored onto a plurality of threaded holes 9 in the body of the case 1 around the driving shaft 2, said bracket having a foot 10 which fits under the base 4, to tighten the base to the box firmly when assembling the gear reduction unit.

This solution permits to reduce the whole load on the screws 7, since most of the forces generated by the shaft 2 are unloaded onto the bracket 8 and the foot 10, avoiding the overload of the screws 7, which thus perform the function of safety auxiliary fastening and simple positioning of the assembly.

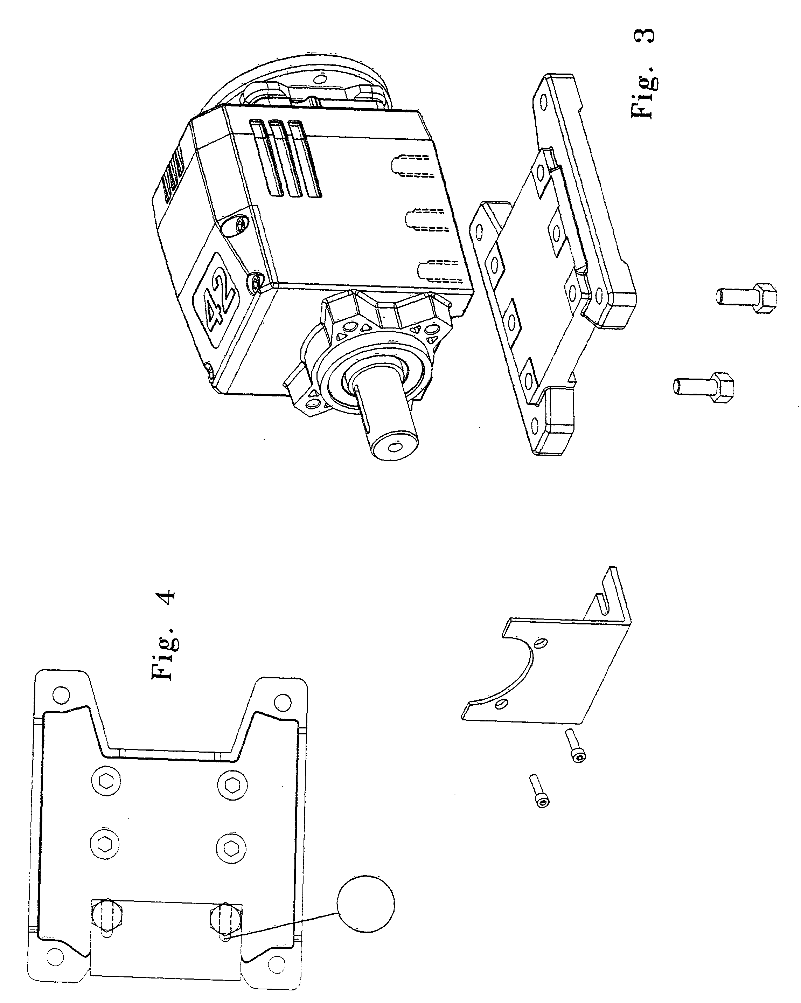

Furthermore, the bracket foot 10 can lie over the first two screws for fastening the base to the body 1, preventing them from unscrewing, as shown in figure 2, or in accordance with a further embodiment of the invention shown in fig. 4, the bracket 8 can be anchored onto a plurality of threaded holes 9 in the body of the case 1 around the driving shaft 2 and also onto a plurality of holes 11 at the base.

The same solution is. not limited to gear motor boxes, as the same invention may be applied also to boxes for rotary machines, e.g. electric motors or the like.

Further, the bracket can be advantageously manufactured as an additional kit, which can be set up also on already existing and assembled gear reduction units.

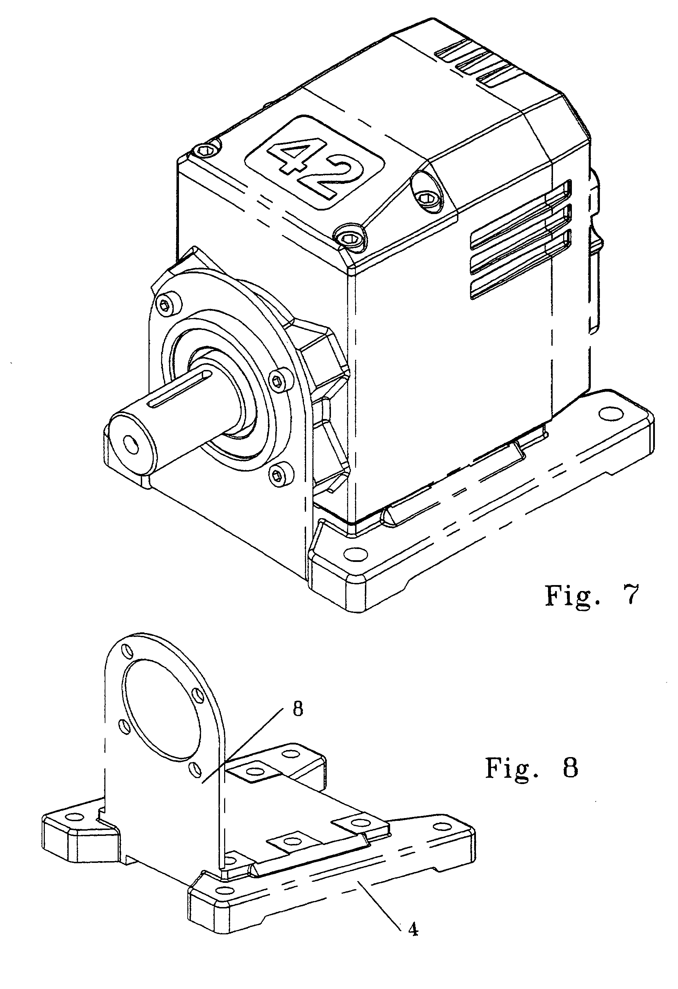

In accordance with a different embodiment of the invention shown in figures 7 and 8, the bracket 8 can be integral witht the base 4.

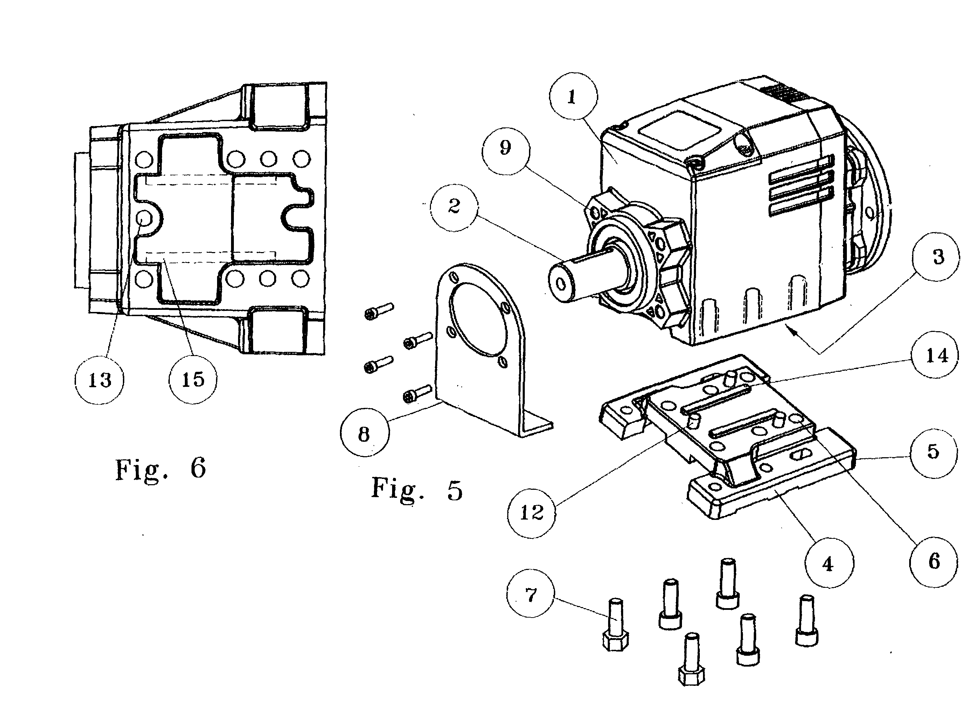

Figures 5 and 6 show a further embodiment of the invention

According to this embodiment, one of the two parts, specifically the base 4, is provided with prominences or protruding elements 12, e.g. milled ribs, teeth or the like, which fit into corresponding housings 13 (see figure 6) being provided in the box body 1 and having the same shape and size as the base protruding parts.

These prominences are preferably integral with the base and, if necessary, they can be finished by milling or the like to give them precise dimensions.

Alternatively, or in addition to the prominences 12, other binding means may be provided, such as, in particular, plugs 14 or the like, being anchored to the base 4 and fitting into corresponding box holes 15.

Obviously, the prominences or the plugs or both of them can be provided on the box body and the corresponding housings in the base 4.

The engagement of these base protruding elements with the corresponding box housings ensure that the two parts are perfectly locked, so as to prevent each of the two parts from sliding with respect to the other.

In addition, to ensure the maximum stiffness a coat of adhesive, e.g. 638 adhesive manufactured by the Company Loctite, can be applied between the lower wall 3 of the body 1 and the base 4, to provide a substantially single-piece assembly, to prevent each part from sliding, even to a minimum extent, with respect to the other.

This solution permits to reduce drastically the stresses normally unloaded onto the screws 7, since the forces generated by the shaft 2 are unloaded onto the plugs 14 and the prominences 12, as well as onto the whole lower wall of the body 1, which is bound to the base 4 by means of adhesive. This way the screws 7 only have to limit possible vertical shifts between the base 4 and the body 1.

As will be apparent, the described solution is considerably convenient, since it permits to have in stock only one kind of gear reduction unit provided with a plurality of feet permitting to set the gear reduction unit on several kinds of machines even in the place of gear reduction units of other already existing makes.

## Claims

1. A box for rotary machines, including gear motors, having an interchangeable base, comprising a box body *(1)* containing the devices forming a gear reduction unit, a driving shaft *(2)* and an interchangeable base *(4)* to be applied onto said body and being provided with means *(5)* for fastening it to the frame of a machine, **characterized in that** it comprises a bracket *(8)* to be fastened to said box body *(1)* adjacent to said driving shaft *(2)*, said bracket having a foot *(10)* to be fitted under said base to absorb the stresses from said driving shaft, preventing said stresses from unloading on the fastening screws *(7)* for fastening the body to the base.

2. A box for rotary machines, according to claim 1, **characterized in that** said foot *(10)* extends along a length sufficient to cover at least partly said screws *(7)* which fasten said base to said box body.

3. A box for rotary machines, in particular gear motors, according to claim 1, **characterized in that** said bracket (8) is anchored onto a plurality of threaded holes (9) in the body of the case (1) around the driving shaft (2).

4. A box for rotary machines, in particular gear motors, according to claim 1, **characterized in that** said bracket (8) is anchored also onto a plurality of holes (11) at the base.

5. A box for rotary machines, in particular gear motors, according to claim 1, **characterized in that** said bracket (8) is integral with said base (4).

6. A box for rotary machines, according to any of the preceding claims, **characterized in that** it comprises on the box (1) and/or on the base (4) binding means cooperating with corresponding means placed on said base and/or said box to bind the two rigidly, so as to limit the load transmitted by the moving means to the fastening screws (7).

7. A box for rotary machines according to claim 6, **characterized in that** on the box (1) or on the base (4) it comprises protruding elements (12) fitting into corresponding housings (13) provided in the other part, to prevent each of the two parts from sliding with respect to the other part and to absorb the load transmitted by the moving means, so as to limit the stresses on the fastening screws (7).

8. A box for rotary machines according to claim 7, **characterized in that** in said base it comprises protruding parts such as ribs, teeth or the like fitting into corresponding housings provided in the box body.

9. A box for rotary machines according to claim 8, **characterized in that** it comprises one or more plugs (14) being attached to one of the two parts, said plugs fitting into corresponding holes (15) provided in the other part,

10. A box for rotary machines according to any of the preceding claims, **characterized in that** an adhesive is used to bind the body with the base rigidly.

## Patentansprüche

1. Gehäuse für rotierende Maschinen, einschließlich Getriebemotoren, mit einem auswechselbaren Sockel, umfassend einen Gehäusekörper (1), der die ein Untersetzungsgetriebe bildenden Einrichtungen enthält, eine Antriebswelle (2) und einen auswechselbaren Sockel (4), der an den Gehäusekörper anzusetzen ist und eine Einrichtung (5) zu seiner Befestigung am Maschinenrahmen aufweist, **gekennzeichnet durch** eine an dem Gehäusekörper (1) nahe der Antriebswelle (2) zu befestigende Stütze (8) mit einem unter den Sockel einzufügenden Fuß (10) zur Aufnahme der Spannungen von der Antriebswelle, um zu verhindern, daß diese Spannungen an den den Gehäusekörper am Sockel befestigenden Befestigungsschrauben (7) angreifen.

2. Gehäuse für rotierende Maschinen nach Anspruch 1 **dadurch gekennzeichnet, daß** der Fuß (10) über eine Länge verläuft, die ausreicht, um die den Sockel an dem Gehäusekörper befestigenden Schrauben (7) mindestens teilweise zu bedecken.

3. Gehäuse für rotierende Maschinen, insbesondere Getriebemotoren, nach Anspruch 1, **dadurch gekennzeichnet, daß** die Stütze (8) an mehreren Gewindebohrungen (9) in dem Gehäusekörper (1) um die Antriebswelle (2) herum verankert ist.

4. Gehäuse für rotierende Maschinen, insbesondere Getriebemotoren, nach Anspruch 1, **dadurch gekennzeichnet, daß** die Stütze (8) an mehreren Bohrungen (11) am Sockel verankert ist.

5. Gehäuse für rotierende Maschinen, insbesondere Getriebemotoren, nach Anspruch 1, **dadurch gekennzeichnet, daß** die Stütze (8) an den Sockel (4) angeformt ist.

6. Gehäuse für rotierende Maschinen nach einem der vorhergehenden Ansprüche, **gekennzeichnet durch** eine an dem Gehäuse (1) und/oder dem Sockel (4) vorhandene Verbindungseinrichtung, die mit einer an dem Sockel bzw. Gehäuse vorgesehenen entsprechenden Einrichtung zusammenwirkt, um die beiden Teile starr miteinander zu verbinden und die Last zu begrenzen, die von der sich bewegenden Einrichtung auf die Befestigungsschrauben (7) übertragen wird.

7. Gehäuse für rotierende Maschinen nach Anspruch 6, **gekennzeichnet durch** von dem Gehäuse (1) oder dem Sockel (4) herausragende Bauteile (12), die in entsprechende Aufnahmen (13) in dem anderen Teil passen, um zu verhindern, daß sich die beiden Teile gegeneinander verschieben, und die von der sich bewegenden Einrichtung übertragene Last zu absorbieren und damit die Spannungen auf die Befestigungsschrauben (7) zu begrenzen.

8. Gehäuse für rotierende Maschinen nach Anspruch 7, **dadurch gekennzeichnet, daß** der Sockel herausragende Teile, etwa Rippen, Zähne oder dergleichen, aufweist, die in entsprechende Ausnehmungen in dem Gehäusekörper passen.

9. Gehäuse für rotierende Maschinen nach Anspruch 8, **dadurch gekennzeichnet, daß** an einem der beiden Teile ein oder mehrere Stifte vorgesehen sind, die in entsprechende Löcher (15) in dem anderen Teil passen.

10. Gehäuse für rotierende Maschinen nach einem der vorhergehenden Ansprüche, **dadurch gekennzeichnet, daß** zur starren Verbindung des Gehäusekörpers mit dem Sockel ein Klebstoff dient.

## Revendications

1. Boîte pour machines rotatives, y compris les moteurs à engrenages, ayant une base interchangeable, comprenant un corps de boîte (1) qui contient les organes formant un module de réduction à engrenages, un arbre d'entraînement (2) et une base interchangeable (4) destinée à être appliquée sur ledit corps et étant munie d'un moyen (5) servant à la fixer sur le châssis d'une machine, **caractérisée en ce qu'**elle comprend un support (8) destiné à être fixé audit corps de boîte (1) en une position adjacente audit arbre d'entraînement (2), ledit support comprenant un pied (10) destiné à être ajusté sous ladite base pour absorber les contraintes provenant dudit arbre d'entraînement, empêchant lesdites contraintes de se décharger sur les vis de fixation (7) utilisées pour fixer le corps à la base.

2. Boîte pour machines rotatives selon la revendication 1, **caractérisée en ce que** ledit pied (10) s'étend sur une longueur suffisante pour couvrir au moins partiellement lesdites vis (7) qui maintiennent ladite base sur ledit corps de boîte.

3. Boîte pour machines rotatives, en particulier pour moteurs à engrenages, selon la revendication 1, **caractérisée en ce que** ledit support (8) est accroché à une pluralité de trous filetés (9) réalisés dans le corps du carter (1) autour de l'arbre d'entraînement (2).

4. Boîte pour machines rotatives, en particulier pour moteurs à engrenages, selon la revendication 1, **caractérisée en ce que** ledit support (8) est aussi accroché à une pluralité de trous (11) réalisés au niveau de la base.

5. Boîte pour machines rotatives, en particulier pour moteurs à engrenages, selon la revendication 1, **caractérisée en ce que** ledit support (8) est réalisé d'un seul tenant avec ladite base (4).

6. Boîte pour machines rotatives, selon l'une quelconque des revendications précédentes, **caractérisée en ce qu'**elle comprend sur la boîte (1) et/ou sur la base (4) un moyen de blocage coopérant avec un moyen correspondant placé sur ladite base et/ou sur ladite boîte pour relier les deux de façon rigide, afin de limiter la charge transmise par le moyen en mouvement aux vis de fixation (7).

7. Boîte pour machines rotatives selon la revendication 6, **caractérisée en ce qu'**elle comprend, sur la boîte (1) ou sur la base (4), des éléments saillants (12) qui s'ajustent dans des logements correspondants (13) prévus dans l'autre pièce, pour empêcher chacune des deux pièces de coulisser par rapport à l'autre pièce et pour absorber la charge transmise par le moyen en mouvement, afin de limiter les contraintes exercées sur les vis de fixation (7).

8. Boîte pour machines rotatives selon la revendication 7, **caractérisée en ce qu'**elle comprend dans ladite base des parties saillantes telles que des nervures, des dents ou similaires qui s'assemblent à des logements correspondants prévus dans le corps de boîte.

9. Boîte pour machines rotatives selon la revendication 8, **caractérisée en ce qu'**elle comprend une ou plusieurs broches (14) attachées à l'une des deux pièces, lesdites broches s'assemblant à des trous correspondants (15) prévus dans l'autre pièce.

10. Boîte pour machines rotatives, selon l'une quelconque des revendications précédentes, **caractérisée en ce qu'**un adhésif est utilisé pour relier le corps à la base de façon rigide.
